# EUROPEAN PATENT SPECIFICATION

(11) **EP 4 202 360 B1**
(45) Date of publication and mention of the grant of the patent: **28.10.2026**
(21) Application number: 21861037.6
(22) Date of filing: 16.07.2021
(51) Int. Cl.: G01C 21/20, B63B 49/00

(54) **SHIP NAVIGATION ASSISTANCE DEVICE, SHIP NAVIGATION ASSISTANCE METHOD, AND SHIP NAVIGATION ASSISTANCE PROGRAM**
SCHIFFNAVIGATIONSHILFSVORRICHTUNG, SCHIFFNAVIGATIONSHILFSVERFAHREN UND SCHIFFNAVIGATIONSHILFSPROGRAMM
DISPOSITIF D'AIDE À LA NAVIGATION DE NAVIRE, PROCÉDÉ D'AIDE À LA NAVIGATION DE NAVIRE ET PROGRAMME D'AIDE À LA NAVIGATION DE NAVIRE

(30) Priority: 24.08.2020 JP 2020140550
(43) Date of publication of application: 28.06.2023
(73) Proprietor: Furuno Electric Co., Ltd., Nishinomiya-City, Hyogo 662-8580 (JP)
(72) Inventor: SONOBE, Tatsuya, Nishinomiya-City, Hyogo 6628580 (JP); TODA, Hiroyuki, Nishinomiya-City, Hyogo 6628580 (JP); NAKAMURA, Hiraku, Nishinomiya-City, Hyogo 6628580 (JP); TSUJIMOTO, Kazuki, Nishinomiya-City, Hyogo 6628580 (JP)
(74) Representative: Müller Hoffmann & Partner
(86) International application number: PCT/JP2021/026771
(87) International publication number: WO 2022/044608

(56) References cited:
- JP-A- 2007 041 499
- JP-A- 2007 106 397
- JP-A- 2012 161 444
- JP-A- 2019 079 352
- US-A1- 2019 308 713

## Description

### TECHNICAL FIELD

The present disclosure relates to a ship navigation assistance technology which is used when anchoring a ship.

### BACKGROUND ART

In Patent Document 1, a docking assistance device for a ship is disclosed. The docking assistance device disclosed in Patent Document 1 uses a distance measurement means to measure a distance between the ship and a plurality of points of a quay.

Document US 2019/308713 A1 disclose a boat comprising the following elements. A sensor that detects a shape of a surrounding environment of a boat and a positional relationship between the surrounding environment and the boat body outputs environment information indicating the shape of the surrounding environment and the positional relationship. A display displays an environment map indicating the surrounding environment. An input accepts an input of a shore arrival target position of the boat body on the environment map and outputs target position information indicating the shore arrival target position. A controller receives the environment information and the target position information, determines a possible shore arrival space of the boat body in the surrounding environment based on the environment information, and corrects the shore arrival target position based on the possible shore arrival space. The controller generates an instruction signal to control a propulsion device so as to cause the boat body to arrive at the shore at the corrected shore arrival target position.

### [Reference Document(s) of Conventional Art]

[Patent Document 1] JP5000244B2

### DESCRIPTION OF THE DISCLOSURE

### [Problem(s) to be Solved by the Disclosure]

However, the distance measured by the distance measurement means as described in the conventional technology contains an error. In addition, this error occurs in every measurement of the distance, and increases sequentially.

Thus, one purpose of the present disclosure is to suppress an error which occurs in movement, such as in anchoring a ship.

### [Means for Solving the Problem(s)]

The problem is solved by the teachings of the independent claims. Further embodiments are defined in the dependent claims. The invention is defined by the appended claims.

According to this configuration, the ranging result is reflected on characteristic information after updating.

### [Effect of the Disclosure]

According to the present disclosure, the error which occurs in movement, such as in anchoring a ship, can be suppressed.

### BRIEF DESCRIPTION OF DRAWINGS

Fig. 1 is a functional block diagram illustrating a configuration of a ship navigation assistance device according to one embodiment of the present disclosure.
Fig. 2 is a functional block diagram illustrating a configuration of a provisional initial information setting module.
Fig. 3 is a functional block diagram illustrating a configuration of a measurement module.
Fig. 4 is a functional block diagram illustrating a configuration of a characteristic information updating module.
Fig. 5 is a view illustrating one example of a method of specifying provisional initial information.
Fig. 6 is a graph illustrating one of the example settings of a weighting coefficient.
Fig. 7 is a functional block diagram illustrating one of the concrete example applications of the configuration of the ship navigation assistance device according to one embodiment of the present disclosure.
Fig. 8 is a view illustrating an updating concept of a quay line.
Figs. 9(A), 9(B), and 9(C) are views illustrating an update state of the quay line.
Figs. 10(A) and 10(B) are flowcharts illustrating outline processing of a ship navigation assistance method.
Fig. 11(A) is a flowchart illustrating a concrete process flow of the update of the characteristic information illustrated in Fig. 10(A), and Fig. 11(B) is a flowchart illustrating a concrete process flow of the update of the quay line illustrated in Fig. 10(B).
Fig. 12 is a flowchart illustrating another concrete process flow of the update of the characteristic information.
Fig. 13 is a flowchart illustrating another concrete process flow of the update of the characteristic information.
Fig. 14(A) is a flowchart illustrating processing of the ship navigation assistance method including generation of navigation assistance information, and Fig. 14(B) illustrates a case where the processing of Fig. 14(A) is set to a more concrete object (quay).
Fig. 15 is a functional block diagram illustrating a configuration of the ship navigation assistance device in an aspect in which the quay line and a quay reference point are calculated and updated.
Figs. 16(A), 16(B), and 16(C) are views illustrating an update state of the quay line and the quay reference point.
Fig. 17 is a flowchart illustrating outline processing of a method of updating the quay line and the quay reference point.
Fig. 18 is a flowchart illustrating the method of updating the quay reference point.
Fig. 19 is a flowchart illustrating a processing which sets the provisional initial information based on positional coordinates of the past of the characteristic information on the object.

### MODES FOR CARRYING OUT THE DISCLOSURE

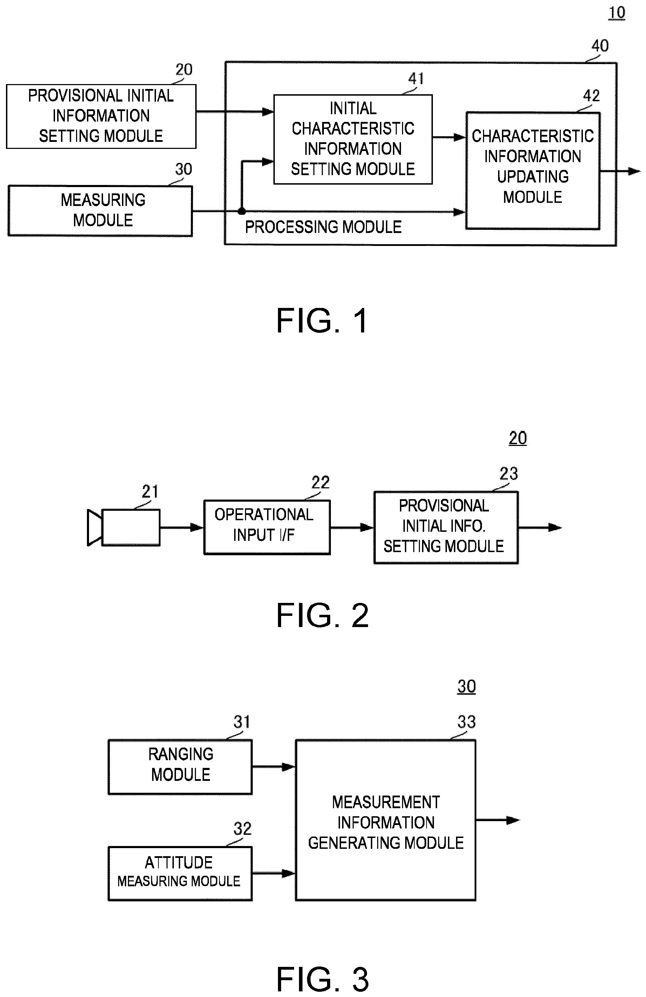

A ship navigation assistance technology according to one embodiment of the present disclosure is described with reference to the drawings. Fig. 1 is a functional block diagram illustrating a configuration of a ship navigation assistance device according to one embodiment of the present disclosure. Fig. 2 is a functional block diagram illustrating a configuration of a provisional initial information setting module. Fig. 3 is a functional block diagram illustrating a configuration of a measurement module.

### (Outline Configuration of Ship Navigation Assistance Device 10)

As illustrated in Fig. 1, the ship navigation assistance device 10 may include a provisional initial information setting module 20, a measurement module 30, and a processing module 40. The ship navigation assistance device 10 may be realizable, for example, by a memory device which stores a program (ship navigation assistance program) for implementing a ship navigation assistance method, and a processing unit, such as a CPU, for executing the ship navigation assistance program, except for optical-system modules and radio-wave-system modules. Further, the modules of the memory device and the processing unit may also be realized by an IC etc. in which the navigation assistance program is incorporated.

The provisional initial information setting module 20 may accept a specification of provisional initial information for characteristic information on an object to which a ship anchors or docks (docks to a pier). The provisional initial information setting module 20 may output the provisional initial information to the processing module 40. For example, the object may be a quay (wall), the characteristic information may be a vector quantity of a quay line, or positional coordinates of a quay reference point, and the provisional initial information may be a provisional quay line (vector quantity) and a provisional quay reference point (positional coordinates).

The measurement module 30 may range or measure a distance to an area including the object to which the ship anchors or docks (docks to a pier). The measurement module 30 may acquire measurement information on the object using the ranging result. The measurement module 30 may output the measurement information to the processing module 40. For example, the measurement information may be a vector quantity of a line segment (straight line).

The processing module 40 may include an initial characteristic information setting module 41 and a characteristic information updating module 42. The provisional initial information may be inputted into the initial characteristic information setting module 41. The measurement information may be inputted into the initial characteristic information setting module 41 and the characteristic information updating module 42.

The initial characteristic information setting module 41 may set initial characteristic information using the provisional initial information and the measurement information. The initial characteristic information may be, for example, an initial quay line (vector quantity) and initial a quay reference point (positional coordinates).

In detail, for example, if the number of measurement information on the object is one, the initial characteristic information setting module 41 may set this measurement information as the initial characteristic information. If there are a plurality of measurement information on the object, the initial characteristic information setting module 41 may set the initial characteristic information based on the plurality of measurement information. For example, the initial characteristic information setting module 41 may detect measurement information (maximum likelihood measurement information) of which the position and the direction to the ship are most similar to the provisional initial information, among the plurality of measurement information. The initial characteristic information setting module 41 may set the maximum likelihood measurement information as the initial characteristic information. By performing such processing, the ship navigation assistance device 10 can suppress an error of the initial characteristic information, rather than when a user manually inputting the initial characteristic information. The initial characteristic information setting module 41 may output the initial characteristic information to the characteristic information updating module 42.

The characteristic information updating module 42 may update the characteristic information using the measurement information. For example, the characteristic information updating module 42 may update it to new characteristic information using the measurement information at a time point substantially the same as the setting timing of the initial characteristic information. Further, thereafter, the characteristic information updating module 42 may sequentially update the characteristic information using the acquired measurement information. Note that more detailed configuration and processing of the characteristic information updating module 42 will be described later.

By performing such processing, the characteristic information to be updated may be set based on the measurement information for every update. Therefore, even if the characteristic information is sequentially updated, an increase in the error can be suppressed. Therefore, for example, the ship navigation assistance device 10 can suppress an error which is contained in information to be acquired when the ship moves to the object (e.g., a spatial relationship, a distance, and a direction between the ship and the object). As a more concrete example, for example, it can suppress the errors contained in the distance and the direction between the ship and the quay line or the quay reference point in movement (docking), such as anchoring the ship.

### (Configuration of Provisional Initial Information Setting Module 20)

As illustrated in Fig. 2, the provisional initial information setting module 20 may include a camera 21, an operational input interface 22, and a provisional initial information setting sub-module 23.

The camera 21 may be connected to the operational input interface 22. The camera 21 may be, for example, a monocular camera, which images an area including the object (for example, a quay). The camera 21 may output the captured image to the operational input interface 22.

The processing input interface 22 may be, for example, realized by a touch panel. The processing input interface 22 may display the inputted image. The processing input interface 22 may accept an operational input from a user, and detect an operated position on the image (a locus of the operation). The processing input interface 22 may output the operated position (the locus of the operation) to the provisional initial information setting sub-module 23.

The provisional initial information setting sub-module 23 may convert the operated position (the locus of the operation) into a vector quantity in a three-dimensional coordinate system which is set to the image, and set up it as provisional initial information. The provisional initial information setting sub-module 23 may output the provisional initial information to the processing module 40.

### (Concrete Example of Method of Specifying Provisional Initial Information)

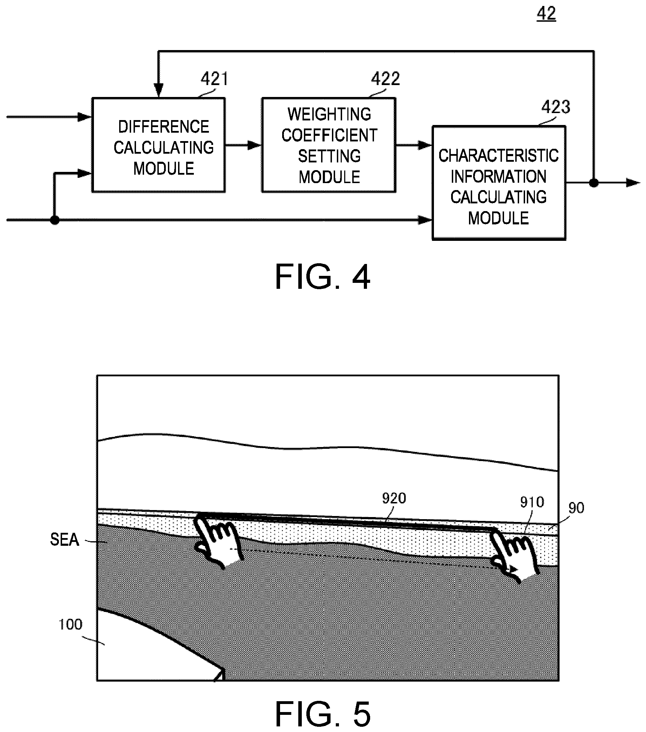

Fig. 5 is a view illustrating one example of a method of specifying the provisional initial information. As illustrated in Fig. 5, the image including a quay 90 which is the object may be displayed on a display screen. When the user operates the touch panel with his/her finger so as to follow an actual quay line 910 displayed on the screen, the operational input interface 22 may detect the locus of the operation (a locus corresponding to a provisional quay line 920 in Fig. 5). In more detail, the operational input interface 22 may detect a group of pixels (a group of coordinates of the pixels) which are operated with the finger in the image, as the locus. The processing input interface 22 may output this locus to the provisional initial information setting sub-module 23.

The provisional initial information setting sub-module 23 may set this locus as the provisional quay line 920. The provisional quay line 920 may be expressed, for example, by a vector quantity which is set based on a direction and a distance on the basis of the position of the ship. The provisional quay line 920 may correspond to the provisional initial information. The provisional initial information setting sub-module 23 may output the provisional quay line 920 to the initial characteristic information setting module 41 of the processing module 40.

### (Configuration of Measurement module 30)

As illustrated in Fig. 3, the measurement module 30 may include a ranging module 31, an attitude measurement module 32, and a measurement information generating module 33.

The ranging module 31 may be realized by a LIDAR, for example. Note that the ranging module 31 may be a LADAR, or other distance measuring equipment, such as optical-based or radio-wave-based equipment. The ranging module 31 may perform a three-dimensional ranging for the area including the object to detect a plurality of characteristic points. The ranging module 31 may output the plurality of characteristic points to the measurement information generating module 33.

The attitude measurement module 32 may be, for example, realized by an attitude sensor provided to the ship. Note that the attitude sensor may use a positioning technique of GNSS signals, or may use an inertia sensor. Further, the attitude sensor may combine the positioning technique of the GNSS signals and the inertia sensor. When the positioning technique of the GNSS signals is used, the position (positional coordinates) of the ship can also be measured. Further, when the positioning technique of the GNSS signals is used, the attitude can be measured with high precision in an open-sky situation, like on the sea. The attitude measurement module 32 may measure the attitude of the ship. The attitude measurement module 32 may output the attitude of the ship to the measurement information generating module 33.

The measurement information generating module 33 may convert (project) the plurality of characteristic points obtained by three-dimensional coordinates into a two-dimensional coordinate system on a horizontal plane. Here, the measurement information generating module 33 can convert the plurality of characteristic points in the three-dimensional coordinate system into the two-dimensional coordinate system on the horizontal plane with high precision by utilizing the attitude of the ship, for example, even if the ship rolls or pitches.

The measurement information generating module 33 may apply a given conversion process (for example, a Hough conversion process) to the plurality of characteristic points disposed at the two-dimensional coordinates on the horizontal plane to generate the measurement information. The measurement information generating module 33 may output the generated measurement information to the initial characteristic information setting module 41 and the characteristic information updating module 42 of the processing module 40. Note that the processing for converting the plurality of characteristic points obtained by the three-dimensional coordinates into the two-dimensional coordinate system on the horizontal plane can be omitted.

### (More Concrete Description of Processing Module 40)

The processing module 40 includes the initial characteristic information setting module 41 and the characteristic information updating module 42, as described above. The initial characteristic information setting module 41 is described above, and therefore, explanation thereof will be omitted below. The initial characteristic information setting module 41 sets the initial characteristic information using the provisional initial information and the measurement information, and output it to the characteristic information updating module 42.

### (Configuration and Processing of Characteristic Information Updating Module 42)

Fig. 4 is a functional block diagram illustrating a configuration of the characteristic information updating module. As illustrated in Fig. 4, the characteristic information updating module 42 includes a difference calculation module 421, a weighting coefficient setting module 422, and a characteristic information calculation module 423.

The difference calculation module 421 calculates a difference between the characteristic information and the measurement information. In more detail, when the initial characteristic information is inputted into the difference calculation module 421, the difference calculation module 421 may calculate the difference between the initial characteristic information and the measurement information corresponding to this timing. Further, when the characteristic information updated by the characteristic information calculation module 423 is fed back to the difference calculation module 421, the difference calculation module 421 may calculate a difference between the fed-back characteristic information and the measurement information corresponding to the fed-back timing. Note that the measurement information corresponding to the timing illustrated here indicates, for example, the measurement information acquired at a time point immediately after that timing.

When a plurality of measurement information are acquired, the difference calculation module 421 calculates a difference between the initial characteristic information or the fed-back characteristic information (the characteristic information before updating) and the measurement information, for every plurality of measurement information. The difference calculation module 421 outputs the difference for each measurement information to the weighting coefficient setting module 422.

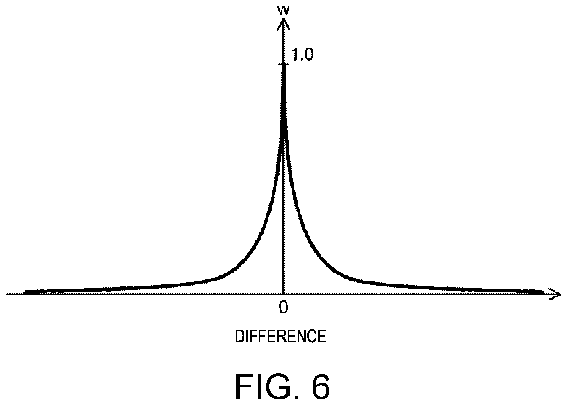

The weighting coefficient setting module 422 sets a weighting coefficient according to the difference for each measurement information. Fig. 6 is a graph illustrating the setting of the weighting coefficient. As illustrated in Fig. 6, the weighting coefficient is set so that a weighting coefficient w becomes smaller as an absolute value of the difference becomes larger. The weighting coefficient setting module 422 outputs the weighting coefficient w for each measurement information to the characteristic information calculation module 423.

The measurement information and the weighting coefficient w is input into the characteristic information calculation module 423. The characteristic information calculation module 423 calculates the characteristic information using the measurement information and the weighting coefficient w for this measurement information. In more detail, the characteristic information calculation module 423 may normalize the weighting coefficient w. The normalization as used herein is resetting the weighting coefficient w so that the sum total of adding up all the weighting coefficients becomes 1. Note that this normalization processing may be performed by the weighting coefficient setting module 422.

The characteristic information calculation module 423 may multiply the measurement information by the normalized weighting coefficient w. The characteristic information calculation module 423 may output a result of summing the measurement information by which the weighting coefficient w was multiplied, as new characteristic information (characteristic information after updating).

By such a configuration and processing, the updated characteristic information may be generated by the addition of the measurement information which used the ranging result. Therefore, the accumulation of the error by repeating the update is suppressed.

Further, the measurement information is multiplied by the weighting coefficient. The weighting coefficient is set so that its influence to the updated characteristic information becomes smaller as the difference from the characteristic information before the update becomes larger. Therefore, the updated characteristic information becomes highly precise to the actual characteristic information, because the influence of the error contained in the characteristic information before updating is reduced.

Therefore, the ship navigation assistance device 10 is capable of generating the characteristic information which is highly precise to the actual characteristic information, while suppressing the updating error.

### (Concrete Example Application of Ship Navigation Assistance Device 10)

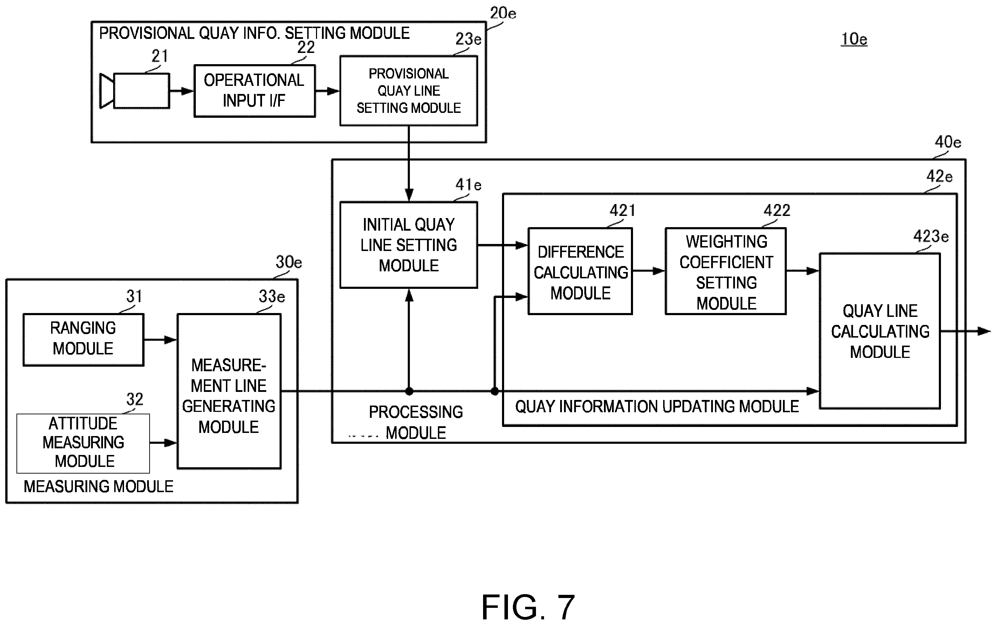

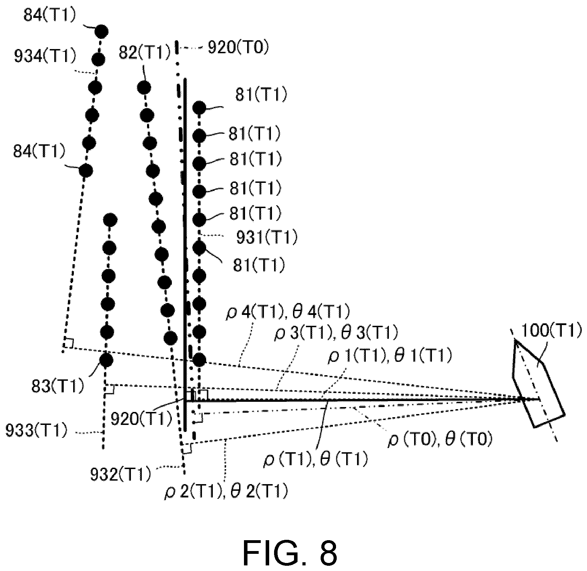

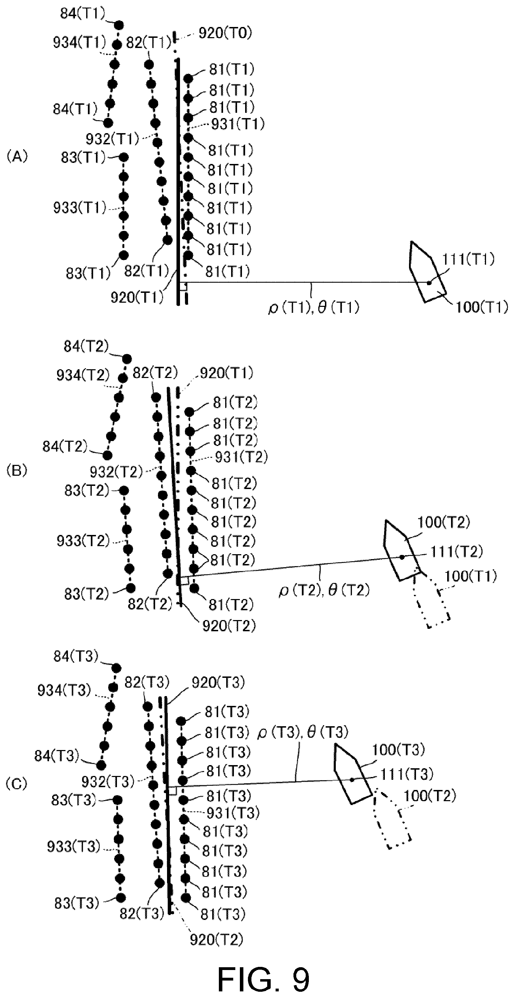

Fig. 7 is a functional block diagram illustrating one example of a concrete example application of the configuration of the ship navigation assistance device according to one embodiment of the present disclosure. Note that Fig. 7 is fundamentally similar to a drawing which combines Fig. 1, Fig. 2, Fig. 3, and Fig. 4, and differs in that the object, the characteristic information, etc. are embodied. Below, only modules which need additional explanation are described, and description of modules which can be understood from the above explanation is omitted. Fig. 8 is a view illustrating a concept of updating the quay line. Figs. 9(A), 9(B), and 9(C) are views illustrating an update state of the quay line.

As illustrated in Fig. 7, the ship navigation assistance device 10e may include a provisional quay information setting module 20e, a measurement module 30e, and a processing module 40e. The provisional quay information setting module 20e corresponds to the above-described provisional initial information setting module 20. The measurement module 30e corresponds to the measurement module 30. The processing module 40e corresponds to the processing module 40.

The provisional quay information setting module 20e may include the camera 21, the operational input interface 22, and a provisional quay line setting sub-module 23e. The provisional quay line setting sub-module 23e corresponds to the provisional initial information setting sub-module 23, and may set a provisional quay line (see the provisional quay line 920 in Fig. 5 described above) using the operational input result. The provisional quay line setting sub-module 23e may output the provisional quay line to the processing module 40e.

The measurement module 30e may include the ranging module 31, the attitude measurement module 32, and a measurement line generating module 33e. The measurement line generating module 33e corresponds to the measurement information generating module 33, and may generate a straight measurement line using the plurality of characteristic points obtained by the ranging and the attitude of a ship 100. The measurement line may be represented by a distance p from a reference point (for example, a sensor position) 111 of the ship 100, and a direction θ of the measurement line on the basis of the position of the ship 100. As illustrated in Fig. 8, the distance p may be a length of a perpendicular line which is drawn from the ship 100 and is perpendicular to the measurement line, and the direction θ may be an angle formed between a reference direction in a given coordinate system and an extending direction of the perpendicular line. The measurement line generating module 33e may output the measurement line to the processing module 40e.

The processing module 40e may include an initial quay line setting module 41e and a quay information updating module 42e. The initial quay line setting module 41e corresponds to the initial characteristic information setting module 41, and the quay information updating module 42e corresponds to the characteristic information updating module 42.

The quay information updating module 42e may include the difference calculation module 421, the weighting coefficient setting module 422, and a quay line calculation module 423e. The quay line calculation module 423e corresponds to the characteristic information calculation module 423.

The provisional quay line and the measurement line may be inputted into the initial quay line setting module 41e. If the number of measurement lines is one, the initial quay line setting module 41e may set this measurement line as the initial quay line. If the number of measurement lines is two or more, the initial quay line setting module 41e may set a maximum likelihood measurement line among the plurality of measurement lines as the initial quay line. For example, the initial quay line setting module 41e may set the maximum likelihood measurement line, for example, as a measurement line with parameters most similar to the parameters (the distance p and the direction θ) of the provisional quay line. The initial quay line setting module 41e may output the initial quay line to the quay information updating module 42e.

The initial quay line and the measurement line may be inputted into the difference calculation module 421 of the quay information updating module 42e. The difference calculation module 421 may calculate a difference between each of the measurement lines and the initial quay line. Here, the difference calculation module 421 may calculate the difference for each parameter. That is, the difference calculation module 421 may calculate, for one measurement line, a difference Δρ of the distance p and a difference Δθ of the direction θ, with respect to the initial quay line.

For example, as illustrated in Fig. 8, for a quay line 920(T0) set at a timing T0, a plurality of measurement lines 931(T1), 932(T1), 933(T1), and 934(T1) measured at a timing T1 immediately after that may be obtained. The measurement line 931(T1) may be obtained at the timing T1, and may be generated from a plurality of characteristic points 81(T1) lined up straight. Similarly, the measurement line 932(T1) may be obtained at the timing T1, and may be generated from a plurality of characteristic points 82(T1) lined up straight. The measurement line 933(T1) may be obtained at the timing T1, and may be generated from a plurality of characteristic points 83(T1) lined up straight. The measurement line 934(T1) may be obtained at the timing T1, and may be generated from a plurality of characteristic points 84(T1) lined up straight. The difference calculation module 421 may output the difference for every measurement line to the weighting coefficient setting module 422.

The difference calculation module 421 may calculate a difference Δρ1(T1) between the distance ρ1(T1) of the measurement line 931(T1), and a distance ρ(T0) of the last quay line 920(T0). The difference calculation module 421 may calculate a difference Δθ1(T1) between the direction θ1(T1) of the measurement line 931(T1) and the direction θ(T0) of the last quay line 920(T0). Similarly, the difference calculation module 421 may calculate a difference Δρ2(T1) and a difference Δθ2(T1) for the measurement line 932(T1), calculate a difference Δρ3(T1) and a difference Δθ3(T1) for the measurement line 933(T1), and calculate a difference Δρ4(T1) and a difference Δθ4(T1) for the measurement line 934(T1). Then, the difference calculation module 421 may output these differences to the weighting coefficient setting module 422.

The weighting coefficient setting module 422 may set the weighting coefficients according to the differences. In more detail, the weighting coefficient setting module 422 may set a first weighting coefficient wp for the distance ρ according to the difference Δρ of the distance ρ. The weighting coefficient setting module 422 may set a second weighting coefficient wθ for the direction θ according to the difference Δθ of the direction θ. The weighting coefficient setting module 422 may output the first weighting coefficient wp and the second weighting coefficient wθ to the quay line calculation module 423e.

The quay line calculation module 423e may normalize the first weighting coefficient wp using the number of measurement lines to be added, respectively. The quay line calculation module 423e may normalize the second weighting coefficient wθ using the number of measurement lines to be added, respectively.

The quay line calculation module 423e may multiply, for every measurement line, the distance ρ by the normalized first weighting coefficient wp, and add up these multiplied values. For example, for the example of Fig. 8, the quay line calculation module 423e may multiply the distance ρ1(T1) of the measurement line 931(T1) by the first weighting coefficient wp1, multiply the distance ρ2(T1) of the measurement line 932(T1) by the first weighting coefficient wp2, multiply the distance ρ3(T1) of the measurement line 933(T1) by the first weighting coefficient wp3, multiply the distance ρ4(T1) of the measurement line 934(T1) by the first weighting coefficient wp4, and add up these multiplied values to calculate the distance ρ(T1) of the quay line 920(T1) at the timing T1.

The quay line calculation module 423e may multiply, for every measurement line, the direction θ by the normalized second weighting coefficient wθ, and add up these multiplied values. For example, for the example of Fig. 8, the quay line calculation module 423e may multiply the direction θ1(T1) of the measurement line 931(T1) by the second weighting coefficient wθ1, multiply the direction θ2(T1) of the measurement line 932(T1) by the second weighting coefficient wθ2, multiply the direction θ3(T1) of the measurement line 933(T1) by the second weighting coefficient wθ3, multiply the direction θ4(T1) of the measurement line 934(T1) by the second weighting coefficient wθ4, and add up these multiplied values to calculate the direction θ(T1) of the quay line 920(T1) at the timing T 1.

By performing such processing, the quay line 920 may be updated sequentially as illustrated in Figs. 9(A), 9(B), and 9(C). For example, in Fig. 9(A), the quay line 920(T1) at the timing T1 may be generated based on the measurement lines 931(T1), 932(T1), 933(T1), and 934(T1) at the timing T1, and the quay line 920(T0) at the last timing T0, and the quay line 920 may be updated. In Fig. 9(B), a quay line 920(T2) at a timing T2 may be generated based on measurement lines 931(T2), 932(T2), 933(T2), and 934(T2) at the timing T2, and the quay line 920(T1) at the last timing T1, and the quay line 920 may be updated. In Fig. 9(C), a quay line 920(T3) at a timing T3 may be generated based on measurement lines 931(T3), 932(T3), 933(T3), and 934(T3) at the timing T3, and the quay line 920(T2) at the last timing T2, and the quay line 920 may be updated.

Thus, by using the configuration of this embodiment, the ship navigation assistance device 10e can update the quay line 920 sequentially, and can suppress the accumulation of the updating error. Especially, by using this configuration and processing, as illustrated in Figs. 9(A), 9(B), and 9(C), the quay line 920 is updated using the ranging result at each timing, even if the ship 100 is moved. Therefore, the influence of the error due to the movement can also be reduced.

### (Ship navigation assistance method)

In the above description, each processing may be performed by an individual functional module. However, the above processing can be implemented by being stored as a ship navigation assistance program and being executed by a processing unit. In this case, the processing may be executed according to the flow illustrated in each of the following drawings. Note that, in the concrete contents of the processing in the following description, the detailed description of the above-described contents is omitted.

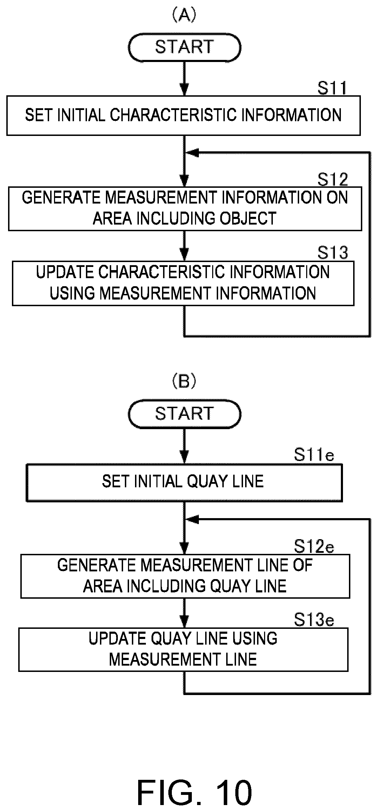

Figs. 10(A) and 10(B) are flowcharts illustrating outline processings of the ship navigation assistance method. Fig. 10(B) illustrates a case where the processing of Fig. 10(A) is set for a more concrete object (quay).

As illustrated in Fig. 10(A), the processing unit (the ship navigation assistance device) may set the initial characteristic information on the object (S11). The processing unit may generate the measurement information on the area including the object (S12). The processing unit may update the characteristic information by calculating new characteristic information from the initial information on the characteristic information on the object or the characteristic information before updating, and the measurement information (S13).

As a more concrete example, when the object is the quay, as illustrated in Fig. 10(B), the processing unit may set the initial quay line (S11e). The processing unit may generate the measurement line of the area including the quay (S12e). The processing unit may update the quay line by calculating a new quay line from the initial quay line or the quay line before updating, and the measurement line (S13e).

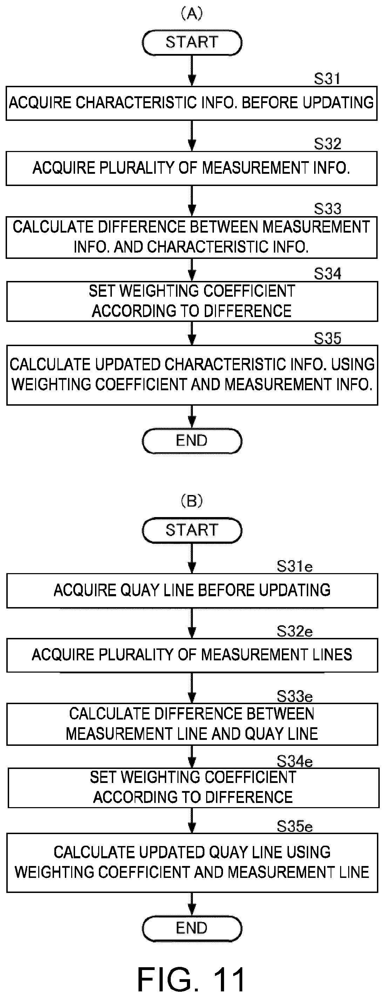

Fig. 11(A) is a flowchart illustrating a concrete process flow of the update of the characteristic information illustrated in Fig. 10(A). Fig. 11(B) is a flowchart illustrating a concrete process flow of the update of the quay line illustrated in Fig. 10(B).

As illustrated in Fig. 11(A), the processing unit may acquire the characteristic information before updating, which includes the initial characteristic information (S31). The processing unit may acquire a plurality of measurement information (S32). The processing unit may calculate a difference between the measurement information and the characteristic information (S33). The processing unit may set, for each measurement information, the weighting coefficient according to the difference (S34). The processing unit may calculate the updated characteristic information using the weighting coefficient and the measurement information (S35).

As a more concrete example, when the object is the quay, as illustrated in Fig. 11(B), the processing unit may acquire the quay line before updating, which includes the initial quay line (S31e). The processing unit may acquire a plurality of measurement lines (S32e). The processing unit may calculate a difference between the measurement line and the quay line (S33e). The processing unit may set, for every measurement line, the weighting coefficient according to the difference (S34e). The processing unit may calculate the updated quay line using the weighting coefficient and the measurement line (S35e).

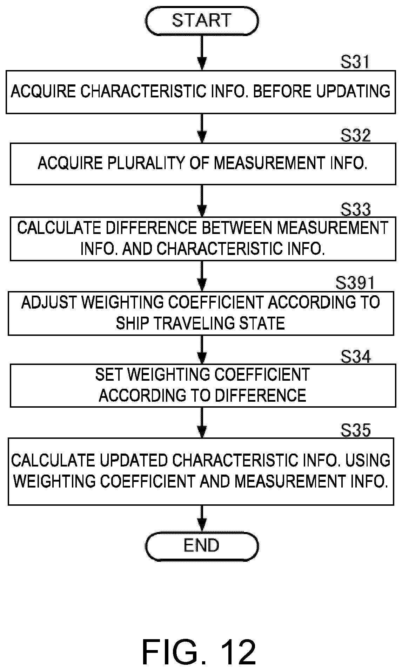

Note that the weighting coefficient may be adjusted according to a traveling state of the ship. Fig. 12 is a flowchart illustrating another concrete process flow of the update of the characteristic information. The processing illustrated in Fig. 12 differs from the processing illustrated in Fig. 11(A) in an adjustment processing of the weighting coefficient. Other processings illustrated in Fig. 12 are similar to the processing illustrated in Fig. 11(A), and description of the similar modules is omitted.

As illustrated in Fig. 12, the processing unit may adjust the weighting coefficient according to the traveling state of the ship (S391). For example, the processing unit may reduce the reduction of the weight according to the difference as the ship becomes farther from the object. Further, the processing unit may reduce the reduction of the weight according to the difference as the traveling speed of the ship is faster (in more detail, for example, as the approaching speed to the object is faster). Note that these contents of the adjustment are examples, and, for example, the reduction of the weight may be reduced as the traveling state has a larger error contained in the ranging result and the measurement information.

By performing such processing, the ship navigation assistance devices 10 and 10e can update the characteristic information (for example, the quay line) with higher accuracy.

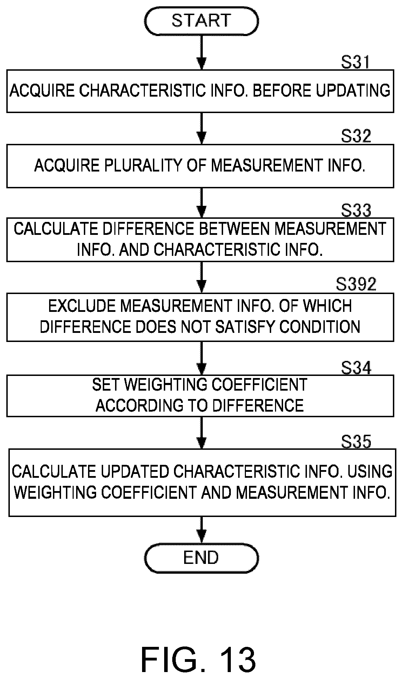

Further, in the above description, the acquired measurement information may be used for the update of the characteristic information as much as possible. However, the measurement information which does not satisfy a condition may not be used. Fig. 13 is a flowchart illustrating another concrete process flow of the update of the characteristic information. The processing illustrated in Fig. 13 differs from the processing illustrated in Fig. 11(A) in a selection processing of the measurement information. Other processings illustrated in Fig. 13 are similar to the processing illustrated in Fig. 11(A), and description of the similar modules is omitted.

As illustrated in Fig. 13, the processing unit may exclude the measurement information of which the difference does not satisfy the condition (S392). This condition may be, for example, that the difference exceeds a threshold, in more detail, that the difference Δρ of the distance ρ exceeds a threshold for the distance, or that the difference Δθ of the direction θ exceeds a threshold for the direction.

By performing such processing, the ship navigation assistance devices 10 and 10e can eliminate, from the calculation of the characteristic information, the measurement information which has a bad influence to the calculation of the characteristic information (clearly far from the object, clearly different in shape, etc.).

By performing such processing, the characteristic information (quay line) can be updated continuously, for example, even if the measurement information (measurement line) is hardly acquired at a certain timing.

Further, the ship navigation assistance devices 10 and 10e may adopt an averaging processing of the characteristic information (e.g., a moving average). For example, the characteristic information calculation module 423 of the processing module 40 may calculate the updated characteristic information by carrying out the averaging processing with weighting of the characteristic information before updating and the calculated characteristic information. Further, in more detail, the quay line calculation module 423e of the processing module 40e may calculate the updated quay line by carrying out the averaging processing with weighting of the quay line before updating and the calculated quay line.

In this case, although the converging speed of the characteristic information by the update becomes slower by increasing the weight of the characteristic information (quay line) before updating, the influence by the error of the measurement information (measurement line) can be reduced. For example, if the ship is a large ship or a vessel, this is especially useful because the influence by the error is more important than the converging speed.

### (Method of Generating Navigation Assistance Information)

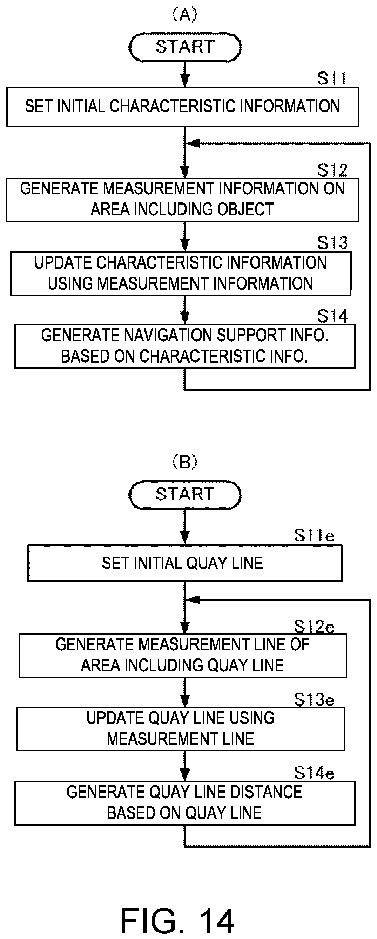

In the above description, the update and the output of the characteristic information (for example, the update and the output of the quay line) may be performed. However, the ship navigation assistance devices 10 and 10e can generate further navigation assistance information using the acquired characteristic information (for example, the quay line). Fig. 14(A) is a flowchart illustrating processing of the ship navigation assistance method including generation of the navigation assistance information. Fig. 14(B) illustrates a case where the processing of Fig. 14(A) is set for a more concrete object (quay). Note that the processing illustrated in Fig. 14(A) differs from the processing illustrated in Fig. 10(A) in that generation processing of navigation assistance information is added, and the processing illustrated in Fig. 14(B) differs from the processing illustrated in Fig. 10(B) in that generation of a quay line distance is added. Other processings of Figs. 14(A) and 14(B) are similar to the processings illustrated in Figs. 10(A) and 10(B), respectively, and description of the similar modules is omitted.

As illustrated in Fig. 14(A), the processing unit (the ship navigation assistance device) may generate the navigation assistance information based on the characteristic information (S14).

As a more concrete example, when the characteristic information is the quay line, as illustrated in Fig. 14(B), the processing unit may generate the quay line distance based on the calculated (updated) quay line (S14e). The quay line distance may be obtained based on the distance ρ of the quay line, for example.

### (When Calculating and Updating Quay Line and Quay Reference Point)

In the above-described concrete description, the quay line may be calculated and updated. However, it is also possible to calculate and update other characteristic information related to the quay. Below, as other characteristic information, the quay reference point is calculated and updated. Note that the quay reference point is a reference point when the ship 100 docks, which is located on the quay line.

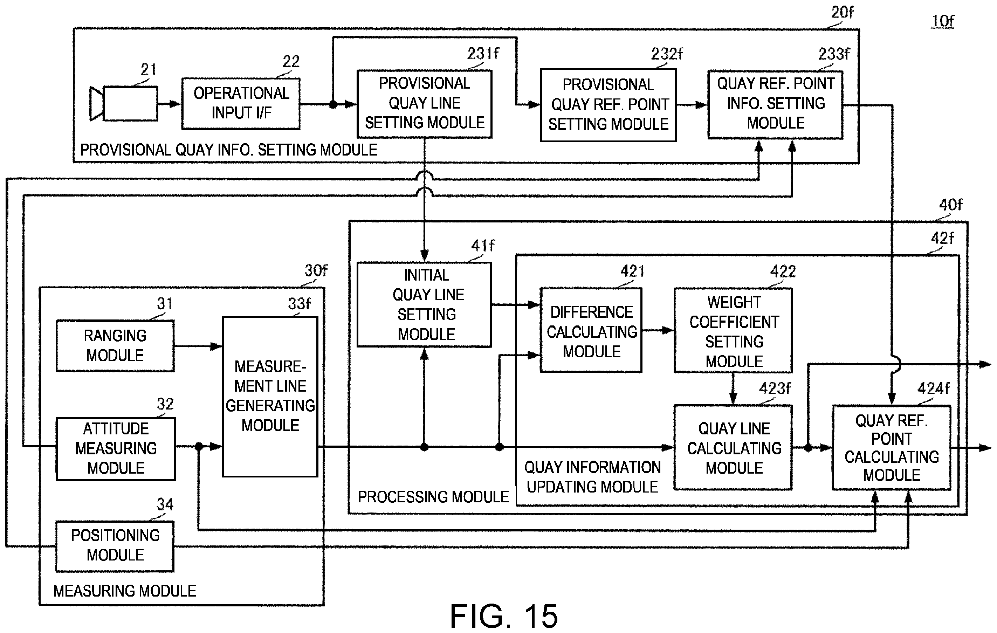

Fig. 15 is a functional block diagram illustrating a configuration of the ship navigation assistance device in which the quay line and the quay reference point are calculated and updated. Note that the ship navigation assistance device 10f illustrated in Fig. 15 differs from the ship navigation assistance device 10e illustrated in Fig. 7 in that a provisional quay reference point setting sub-module 232f, a quay reference point information setting sub-module 233f, a positioning module 34, and a quay reference point calculation module 424f are further provided. Other configurations of the ship navigation assistance device 10f are similar to those of the ship navigation assistance device 10e, and description of the similar modules is omitted.

The ship navigation assistance device 10f may include a provisional quay information setting module 20f, a measurement module 30f, and a processing module 40f. The provisional quay information setting module 20f may include the camera 21, the operational input interface 22, a provisional quay line setting sub-module 231f, the provisional quay reference point setting sub-module 232f, and the quay reference point information setting sub-module 233f. The provisional quay line setting sub-module 231f may have a similar function to the provisional quay line setting sub-module 23e.

The measurement module 30f may include the ranging module 31, the attitude measurement module 32, a measurement line generating module 33f, and the positioning module 34. The measurement line generating module 33f may have a similar function to the measurement line generating module 33e. The positioning module 34 may have, for example, a positioning function of the GNSS, which measures the position of the ship 100.

The processing module 40f may include an initial quay line setting module 41f and a quay information updating module 42f. The initial quay line setting module 41f may have a similar function to the initial quay line setting module 41e.

The quay information updating module 42f may include the difference calculation module 421, the weighting coefficient setting module 422, a quay line calculation module 423f, and the quay reference point calculation module 424f. The quay line calculation module 423f may have a similar function to the quay line calculation module 423e.

The update of the quay line is similar to that of the above-described ship navigation assistance device 10e, and description thereof is omitted.

### (Update of Quay Reference Point)

The provisional quay reference point setting sub-module 232f may set the provisional quay reference point using the operational input result. For example, the provisional quay reference point setting sub-module 232f may detect coordinates of an operated position on a screen, and set them as the provisional quay reference point. The provisional quay reference point setting sub-module 232f may output the provisional quay reference point to the quay reference point information setting sub-module 233f.

The quay reference point information setting sub-module 233f may calculate a direction ψ of the provisional quay reference point on the basis of the ship 100 using the provisional quay reference point, and the attitude of the ship 100 and the position of the ship 100. Then, the quay reference point information setting sub-module 233f may set the provisional quay reference point including this direction ψ as the initial quay reference point. The quay reference point information setting sub-module 233f may output the direction ψ of the initial quay reference point on the basis of the ship 100, which is indicated using the direction ψ, to the quay reference point calculation module 424f of the processing module 40f.

The updated quay line, the initial quay reference point, the position of the ship 100, and the attitude of the ship 100 may be inputted into the quay reference point calculation module 424f. The quay reference point calculation module 424f may calculate a variation Δψ of the direction ψ using a variation in the position and a variation in the attitude of the ship 100 from the updating timing of the previous quay reference point. The quay reference point calculation module 424f may correct the direction ψ of the initial quay reference point or the direction ψ before updating by the variation Δψ, and update the direction ψ.

The quay reference point calculation module 424f may calculate an intersection between a straight line indicated by the updated direction ψ, and the updated quay line. The quay reference point calculation module 424f may calculate coordinates of the updated quay reference point based on the distance between the intersection and the ship 100, and the position of the ship 100. Thus, the quay reference point calculation module 424f may update the quay reference point.

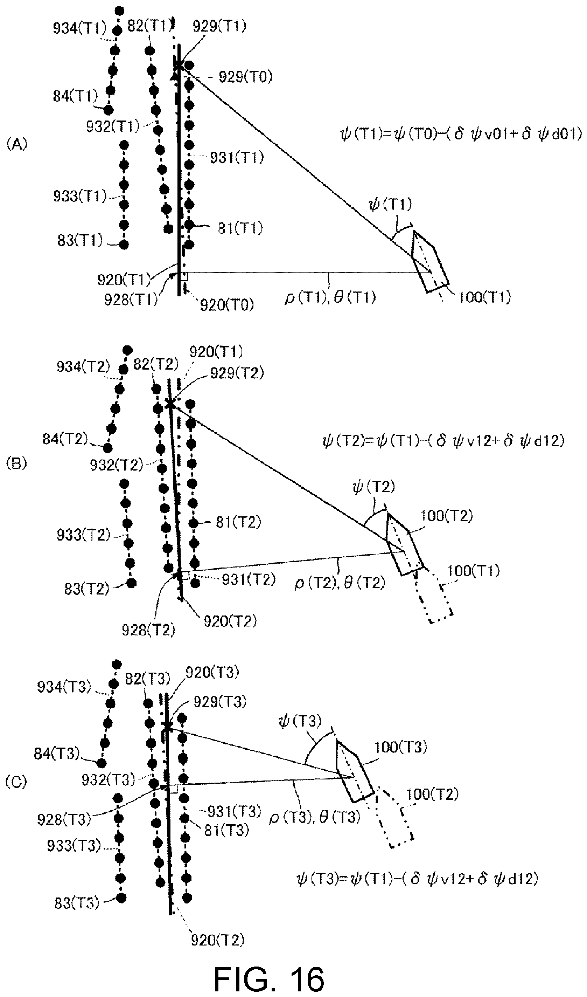

By using such a configuration and processing, for example, as illustrated in Figs. 16(A), 16(B), and 16(C), the quay reference point can be updated together with the quay line. Figs. 16(A), 16(B), and 16(C) are views illustrating an update state of the quay line and the quay reference point.

First, in Fig. 16(A), the initial quay line 920(T0) may be updated to the quay line 920(T1), and in connection with this, an initial quay reference point 929(T0) may be updated to a quay reference point 929(T1). The update of the quay reference point in this case, i.e., a direction ψ(T1) of the quay reference point 929(T1) may be obtained by correcting a direction ψ(T0) of the initial quay reference point 929(T0) by a direction variation Δψv01 due to the change in the position of the ship, and a direction variation Δψd01 due to the change in the attitude. Then, the positional coordinates of the quay reference point 929(T1) can also be calculated by obtaining the direction ψ(T1) of this quay reference point 929(T1), and the quay line 920(T1).

In Fig. 16(B), the quay line 920(T1) may be updated to the quay line 920(T2), and in connection with this, the quay reference point 929(T1) may be updated to a quay reference point 929(T2). The update of the quay reference point in this case, i.e., a direction ψ(T2) of the quay reference point 929(T2) may be obtained by correcting the direction ψ(T1) of the quay reference point 929(T1) by a direction variation Δψv12 due to the change in the position of the ship and a direction variation Δψd12 due to the change in the attitude. Then, the positional coordinates of the quay reference point 929(T2) can also be calculated by obtaining the direction ψ(T2) of this quay reference point 929(T2), and the quay line 920(T2).

In Fig. 16(C), the quay line 920(T2) may be updated by the quay line 920(T3), and in connection with this, the quay reference point 929(T2) may be updated to a quay reference point 929(T3). The update of the quay reference point in this case, i.e., a direction ψ(T3) of the quay reference point 929(T3) may be obtained by correcting the direction ψ(T2) of the quay reference point 929(T2) by a direction variation Δψv23 due to the change in the position of the ship and a direction variation Δψd23 due to the change in the attitude. Then, the positional coordinates of the quay reference point 929(T3) can also be calculated by obtaining the direction ψ(T3) of this quay reference point 929(T3), and the quay line 920(T3).

### (Method of Updating Quay Line and Quay Reference Point)

In the above description, each processing may be executed by the individual functional module. However, the above processing can be realized by being stored as a ship navigation assistance program and being executed by a processing unit. In this case, the processing may be executed according to the flow illustrated in each of the following drawings. Note that, in the concrete contents of the processing in the following description, the detailed description of the above-described contents is omitted.

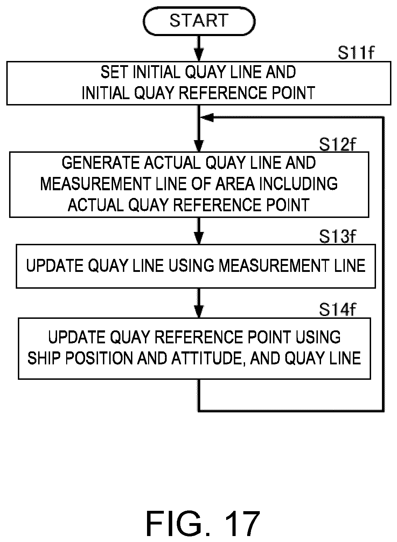

Fig. 17 is a flowchart illustrating outline processing of a method of updating the quay line and the quay reference point. As illustrated in Fig. 17, the processing unit (the ship navigation assistance device) may set the initial quay line and the initial quay reference point (S11f). The processing unit may generate an actual quay line, and a measurement line of the area including an actual quay reference point (S12f). The processing unit may update the quay line using the measurement line (S13f). The processing unit may update the quay reference point using the position and the attitude of the ship 100, and the updated quay line (S14f).

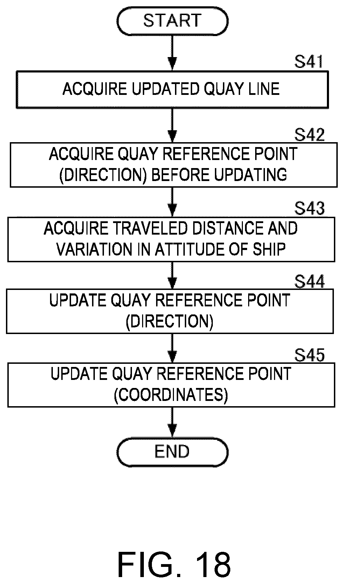

Fig. 18 is a flowchart illustrating a method of updating the quay reference point. As illustrated in Fig. 18, the processing unit (the ship navigation assistance device) may acquire the updated quay line (S41). The processing unit may acquire a direction of the quay reference point before updating (for example, the quay reference point on the basis of the ship 100) (S42).

The processing unit may acquire a traveled distance (a variation in the position) and a variation in the attitude of the ship 100 (S43). The processing unit may update the quay reference point (direction) using the direction of the quay reference point before updating, and the traveled distance (the variation in the position) and the variation in the attitude of the ship 100 (S44). The processing unit may update the quay reference point (positional coordinates) using the updated quay reference point (direction) and the updated quay line (S45).

By using such processing, the ship navigation assistance device 10f can suppress the error in the update of the quay reference point, as well as the update of the quay line.

### (Another Method of Setting Provisional Initial Information (Provisional Quay Line))

In the above explanation, the provisional initial information (provisional quay line) may be set by the user's operational input. However, it is also possible to set the provisional initial information based on the past data of the characteristic information on the object.

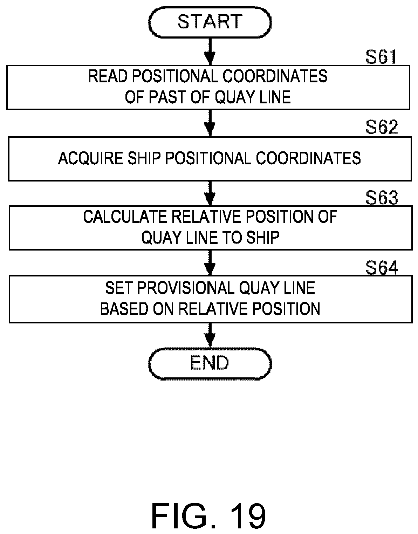

Fig. 19 is a flowchart illustrating a processing which sets the provisional initial information based on the positional coordinates of the past of the characteristic information on the object. Note that, here, the characteristic information on the object is the quay line, and the provisional initial information is the provisional quay line.

The processing unit may store the positional coordinates of the past of the quay line. The processing unit may read the positional coordinates of the past of the quay line (S61). The processing unit may acquire the positional coordinates of the ship (which anchors or docks to the object) (S62). The acquisition of the positional coordinates of the ship may be realizable, for example, by using the above-described positioning technique of the GNSS signals.

The processing unit may calculate a relative position of the quay line with respect to the ship by using these positional coordinates (S63). The processing unit may set the provisional quay line based on the relative position (S64). For example, the processing unit may convert the relative position into a vector quantity set by a distance and a direction on the basis of the ship, and set the provisional quay line.

Note that, here, the positional coordinates of the past of the quay line may be used. However, it is also possible to set a reference station to the quay line and a mobile station to the ship, to detect the relative position by using the technologies of DGPS or RTK, and to set the provisional quay line. Further, it is also possible to receive the coordinates of the quay line from external equipment and set the provisional quay line.

Moreover, in the above description, the initial information is set based on the measurement information, while using the provisional initial information as the reference. However, the provisional initial information may be set as the initial information as it is. Especially, when the above-described positioning technique of the GNSS signals is used, since the provisional initial information is less in the errors, it may be used for the initial information as it is.

Further, in the above description, the example in which the quay is the object is illustrated. However, as long as the object is a pier, another ship, etc., which is an object to which the ship anchors, the above-described configuration and processing are applicable.

Further, in the above description, the example in which the straight line (line segment) is used as the characteristic information is illustrated. However, it is also possible to use a point, a surface, or a curve as the characteristic information, and, also in these cases, the above-described configuration and processing are applicable.

### DESCRIPTION OF REFERENCE CHARACTERS

10, 10e, 10f: Ship Navigation Assistance Device
20: Provisional Initial Information Setting Module
20e, 20f: Provisional Quay Information Setting Module
21: Camera
22: Operational Input Interface
23: Provisional Initial Information Setting Sub-Module
23e: Provisional Quay Line Setting Module
30, 30e, 30f: Measurement Module
31: Ranging Module (Rangefinder)
32: Attitude Measurement Module
33: Measurement Information Generating Module
33e, 33f: Measurement Line Generating Module
34: Positioning Module
40: Processing Module
40e: Processing Module
40f: Processing Module
41: Initial Characteristic Information Setting Module
41e, 41f: Initial Quay Line Setting Module
42: Characteristic Information Updating Module
42e, 42f: Quay Information Updating Module
81, 82, 83, 84: Characteristic Point
90: Quay
100: Ship (Vessel)
231f: Provisional Quay Line Setting Module
232f: Provisional Quay Reference Point Setting Module
233f: Quay Reference Point Information Setting Module
421: Difference Calculation Module
422: Weighting Coefficient Setting Module
423: Characteristic Information Calculation Module
423e, 423f: Quay Line Calculation Module
424f: Quay Reference Point Calculation Module
910: Actual Quay Line
920: Quay Line
929: Quay Reference Point
931, 932, 933, 934: Measurement Line

## Claims

1. A ship navigation assistance device (10, 10e, 10f), comprising:
a measurement module (30, 30e, 30f) configured to acquire measurement information on an object that is an anchorage target of a ship (100) using a ranging result of an area including the object;
a provisional initial information setting module (23, 23e) configured to accept a specification of provisional initial information for characteristic information on the object;
an initial characteristic information setting module (41, 41e, 41f) configured to set initial characteristic information on the object using the provisional initial information and the measurement information; and
a characteristic information updating module (42, 42e, 42f) configured to update characteristic information on the object, wherein the characteristic information updating module is comprising:
a difference calculation module (421) configured to calculate a difference between the initial characteristic information or characteristic information before updating and each of a plurality of measurement information;
a weighting coefficient setting module (422) configured to set a weighting coefficient (w) to each of the plurality of measurement information so that the weighting coefficient becomes smaller as an absolute value of the difference becomes larger; and
a characteristic information calculation module (423, 423e, 423f) configured to calculate updated characteristic information using the weighting coefficient and the plurality of measurement information, wherein
the characteristic information before updating is fed-back characteristic information from the characteristic information calculation module.

2. The ship navigation assistance device of claim 1, wherein the weighting coefficient setting module is further configured to set, as the weighting coefficient,
a first weighting coefficient (wp) set to a distance between the object and the ship, and
a second weighting coefficient (wθ) set to a direction of the object on the basis of the ship, and
wherein the characteristic information calculation module is further configured to calculate the updated characteristic information using the first weighting coefficient and the second weighting coefficient.

3. The ship navigation assistance device of claim 1 or 2, wherein the characteristic information calculation module is further configured to calculate the updated characteristic information using the characteristic information before updating and the calculated characteristic information.

4. The ship navigation assistance device of any one of claims 1 to 3, wherein the measurement module is further comprising:
a ranging module (31) configured to perform three-dimensional ranging of the area including the object; and
a measurement information generating module (33, 33e, 33f) configured to generate the measurement information using a result of the three-dimensional ranging.

5. The ship navigation assistance device of claim 4, wherein the ranging module is further comprising an optical rangefinder.

6. The ship navigation assistance device of claim 4 or 5, wherein the measurement module is further comprising an attitude measurement module (32) configured to measure an attitude of the ship, and
wherein the measurement information generating module is further configured to generate the measurement information using the result of the three-dimensional ranging and the attitude.

7. The ship navigation assistance device of any one of claims 1 to 6, wherein the characteristic information on the object is a vector quantity determined by a spatial relationship between the ship and the object.

8. The ship navigation assistance device of claim 7, wherein the object is a quay (90), and the characteristic information on the object contains a quay line (920) comprised of the vector quantity.

9. The ship navigation assistance device of claim 8, wherein the characteristic information on the object contains coordinates of a quay reference point (929).

10. The ship navigation assistance device of claim 9, wherein the measurement module is further comprising a positioning module (34) configured to measure a position of the ship, and
wherein the characteristic information updating module is further configured to update the quay reference point using the attitude and the position of the ship, and the quay line.

11. A ship navigation assistance method, comprising:
acquiring, using a ranging result of an area including an object that is an anchorage target of a ship, measurement information on the object;
accepting a specification of provisional initial information for characteristic information on the object;
setting initial characteristic information on the object using the provisional initial information and the measurement information; and
updating the characteristic information on the object by:
calculating a difference between the initial characteristic information or characteristic information before updating and each of a plurality of measurement information;
setting a weighting coefficient (w) to each of the plurality of measurement information so that the weighting coefficient becomes smaller as an absolute value of the difference becomes larger;
calculating updated characteristic information using the weighting coefficient and the plurality of measurement information; and
feeding back the updated characteristic information to be used as the characteristic information before updating in a subsequent update of the characteristic information on the object.

12. The method of claim 11, further comprising:
setting, as a weighting coefficient,
a first weighting coefficient set to a distance between the object and the ship, and
a second weighting coefficient set to a direction of the object on the basis of the ship; and
calculating the updated characteristic information using the first weighting coefficient and the second weighting coefficient.

13. The method of claim 11 or 12, wherein the updated characteristic information is calculated using the characteristic information before updating and the calculated characteristic information.

14. A ship navigation assistance program configured to cause a processing unit to execute processing, the processing comprising:
acquiring, using a ranging result of an area including an object that is an anchorage target of a ship, measurement information on the object;
accepting a specification of provisional initial information for characteristic information on the object;
setting the initial characteristic information on the object using the provisional initial information and the measurement information; and
updating the characteristic information on the object by:
calculating a difference between the initial characteristic information or characteristic information before updating and each of a plurality of measurement information;
setting a weighting coefficient (w) to each of the plurality of measurement information so that the weighting coefficient becomes smaller as an absolute value of the difference becomes larger;
calculating updated characteristic information using the weighting coefficient and the plurality of measurement information; and
feeding back the updated characteristic information to be used as the characteristic information before updating in a subsequent update of the characteristic information on the object.

15. The ship navigation assistance program of claim 14, wherein the processing comprises:
setting, as the weighting coefficient,
a first weighting coefficient set to a distance between the object and the ship, and
a second weighting coefficient set to a direction of the object on the basis of the ship; and
calculating the updated characteristic information using the first weighting coefficient and the second weighting coefficient.

## Patentansprüche

1. Schiffsnavigationsassistenzvorrichtung (10, 10e, 10f), aufweisend:
ein Messmodul (30, 30e, 30f), das konfiguriert ist, um Messinformationen zu einem Objekt zu erfassen, das ein Verankerungsziel eines Schiffs (100) ist, unter Verwendung eines Entfernungsmessergebnisses eines Bereichs, der das Objekt umfasst;
ein Modul (23, 23e) zum Einstellen vorläufiger Anfangsinformationen, das konfiguriert ist, um eine Spezifikation vorläufiger Anfangsinformationen für charakteristische Informationen zu dem Objekt zu akzeptieren;
ein Modul (41, 41e, 41f) zum Einstellen anfänglicher charakteristischer Informationen, das konfiguriert ist, um anfängliche charakteristische Informationen zu dem Objekt unter Verwendung der vorläufigen Anfangsinformationen und der Messinformationen einzustellen; und
ein Modul (42, 42e, 42f) zum Aktualisieren charakteristischer Informationen, das konfiguriert ist, um charakteristische Informationen zu dem Objekt zu aktualisieren, wobei das Modul zum Aktualisieren charakteristischer Informationen aufweist:
ein Differenzberechnungsmodul (421), das konfiguriert ist, um eine Differenz zwischen den anfänglichen charakteristischen Informationen oder charakteristischen Informationen vor dem Aktualisieren und jeder einer Vielzahl von Messinformationen zu berechnen;
ein Modul (422) zum Einstellen eines Gewichtungskoeffizienten, das konfiguriert ist, um einen Gewichtungskoeffizienten (w) zu jeder der Vielzahl von Messinformationen einzustellen, so dass der Gewichtungskoeffizient kleiner wird, wenn ein Absolutwert der Differenz größer wird; und
ein Modul (423, 423e, 423f) zum Berechnen charakteristischer Informationen, das konfiguriert ist, um aktualisierte charakteristische Informationen unter Verwendung des Gewichtungskoeffizienten und der Vielzahl von Messinformationen zu berechnen, wobei
die charakteristischen Informationen vor dem Aktualisieren von dem Modul zur Berechnung charakteristischer Informationen rückgemeldete charakteristische Informationen sind.

2. Schiffsnavigationsassistenzvorrichtung nach Anspruch 1, wobei das Modul zum Einstellen eines Gewichtungskoeffizienten ferner konfiguriert ist, um als den Gewichtungskoeffizienten Folgendes einzustellen
einen ersten Gewichtungskoeffizienten (wp), der auf einen Abstand zwischen dem Objekt und dem Schiff eingestellt ist, und
einen zweiten Gewichtungskoeffizienten (wθ), der auf eine Richtung des Objekts auf der Basis des Schiffs eingestellt ist, und
wobei das Modul zur Berechnung charakteristischer Informationen ferner konfiguriert ist, um die aktualisierten charakteristischen Informationen unter Verwendung des ersten Gewichtungskoeffizienten und des zweiten Gewichtungskoeffizienten zu berechnen.

3. Schiffsnavigationsassistenzvorrichtung nach Anspruch 1 oder 2, wobei das Modul zur Berechnung charakteristischer Informationen ferner konfiguriert ist, um die aktualisierten charakteristischen Informationen unter Verwendung der charakteristischen Informationen vor dem Aktualisieren und der berechneten charakteristischen Informationen zu berechnen.

4. Schiffsnavigationsassistenzvorrichtung nach einem der Ansprüche 1 bis 3, wobei das Messmodul ferner aufweist:
ein Entfernungsmessmodul (31), das konfiguriert ist, um eine dreidimensionale Entfernungsmessung des Bereichs durchzuführen, der das Objekt umfasst; und
ein Modul zur Erzeugung von Messinformationen (33, 33e, 33f), das konfiguriert ist, um die Messinformationen unter Verwendung eines Ergebnisses der dreidimensionalen Entfernungsmessung zu erzeugen.

5. Schiffsnavigationsassistenzvorrichtung nach Anspruch 4, wobei das Entfernungsmessmodul ferner einen optischen Entfernungsmesser aufweist.

6. Schiffsnavigationsassistenzvorrichtung nach Anspruch 4 oder 5, wobei das Messmodul ferner ein Lagemessmodul (32) aufweist, das konfiguriert ist, um eine Lage des Schiffs zu messen, und
wobei das Modul zur Erzeugung von Messinformationen ferner konfiguriert ist, um die Messinformationen unter Verwendung des Ergebnisses der dreidimensionalen Entfernungsmessung und der Lage zu erzeugen.

7. Schiffsnavigationsassistenzvorrichtung nach einem der Ansprüche 1 bis 6, wobei die charakteristischen Informationen zu dem Objekt eine Vektorgröße sind, die durch eine räumliche Beziehung zwischen dem Schiff und dem Objekt bestimmt wird.

8. Schiffsnavigationsassistenzvorrichtung nach Anspruch 7, wobei das Objekt ein Kai (90) ist und die charakteristischen Informationen zu dem Objekt eine aus der Vektorgröße bestehende Kailinie (920) enthalten.

9. Schiffsnavigationsassistenzvorrichtung nach Anspruch 8, wobei die charakteristischen Informationen zu dem Objekt Koordinaten eines Kaireferenzpunkts (929) enthalten.

10. Schiffsnavigationsassistenzvorrichtung nach Anspruch 9, wobei das Messmodul ferner ein Positionierungsmodul (34) aufweist, das konfiguriert ist, um eine Position des Schiffs zu messen, und
wobei das Modul zum Aktualisieren charakteristischer Informationen ferner konfiguriert ist, um den Kaireferenzpunkt unter Verwendung der Lage und der Position des Schiffs und der Kailinie zu aktualisieren.

11. Schiffsnavigationsassistenzverfahren, aufweisend:
Erfassen von Messinformationen zu dem Objekt unter Verwendung eines Entfernungsmessergebnisses eines Bereichs, der ein Objekt umfasst, das ein Verankerungsziel eines Schiffs ist;
Akzeptieren einer Spezifikation vorläufiger Anfangsinformationen für charakteristische Informationen zu dem Objekt;
Einstellen anfänglicher charakteristischer Informationen zu dem Objekt unter Verwendung der vorläufigen Anfangsinformationen und der Messinformationen; und
Aktualisieren der charakteristischen Informationen zu dem Objekt durch:
Berechnen einer Differenz zwischen den anfänglichen charakteristischen Informationen oder charakteristischen Informationen vor dem Aktualisieren und jeder einer Vielzahl von Messinformationen;
Einstellen eines Gewichtungskoeffizienten (w) zu jeder der Vielzahl von Messinformationen, so dass der Gewichtungskoeffizient kleiner wird, wenn ein Absolutwert der Differenz größer wird;
Berechnen aktualisierter charakteristischer Informationen unter Verwendung des Gewichtungskoeffizienten und der Vielzahl von Messinformationen; und
Rückmelden der aktualisierten charakteristischen Informationen, die als die charakteristischen Informationen zu verwenden sind, vor dem Aktualisieren in einer nachfolgenden Aktualisierung der charakteristischen Informationen zu dem Objekt.

12. Verfahren nach Anspruch 11, ferner aufweisend:
Einstellen, als einen Gewichtungskoeffizienten,
eines ersten Gewichtungskoeffizienten, der auf einen Abstand zwischen dem Objekt und dem Schiff eingestellt ist, und
eines zweiten Gewichtungskoeffizienten, der auf eine Richtung des Objekts auf der Basis des Schiffs eingestellt ist; und
Berechnen der aktualisierten charakteristischen Informationen unter Verwendung des ersten Gewichtungskoeffizienten und des zweiten Gewichtungskoeffizienten.

13. Verfahren nach Anspruch 11 oder 12, wobei die aktualisierten charakteristischen Informationen unter Verwendung der charakteristischen Informationen vor dem Aktualisieren und der berechneten charakteristischen Informationen berechnet werden.

14. Schiffsnavigationsassistenzprogramm, das konfiguriert ist, eine Verarbeitungseinheit zu veranlassen, eine Verarbeitung auszuführen, wobei die Verarbeitung aufweist:
Erfassen von Messinformationen zu dem Objekt unter Verwendung eines Entfernungsmessergebnisses eines Bereichs, der ein Objekt umfasst, das ein Verankerungsziel eines Schiffs ist;
Akzeptieren einer Spezifikation vorläufiger Anfangsinformationen für charakteristische Informationen zu dem Objekt;
Einstellen der anfänglichen charakteristischen Informationen zu dem Objekt unter Verwendung der vorläufigen Anfangsinformationen und der Messinformationen; und
Aktualisieren der charakteristischen Informationen zu dem Objekt durch:
Berechnen einer Differenz zwischen den anfänglichen charakteristischen Informationen oder charakteristischen Informationen vor dem Aktualisieren und jeder einer Vielzahl von Messinformationen;
Einstellen eines Gewichtungskoeffizienten (w) zu jeder der Vielzahl von Messinformationen, so dass der Gewichtungskoeffizient kleiner wird, wenn ein Absolutwert der Differenz größer wird;
Berechnen aktualisierter charakteristischer Informationen unter Verwendung des Gewichtungskoeffizienten und der Vielzahl von Messinformationen; und
Rückmelden der aktualisierten charakteristischen Informationen, die als die charakteristischen Informationen zu verwenden sind, vor dem Aktualisieren in einer nachfolgenden Aktualisierung der charakteristischen Informationen zu dem Objekt.

15. Schiffsnavigationsassistenzprogramm nach Anspruch 14, wobei die Verarbeitung aufweist:
Einstellen, als den Gewichtungskoeffizienten,
eines ersten Gewichtungskoeffizienten, der auf einen Abstand zwischen dem Objekt und dem Schiff eingestellt ist, und
eines zweiten Gewichtungskoeffizienten, der auf eine Richtung des Objekts auf der Basis des Schiffs eingestellt ist; und
Berechnen der aktualisierten charakteristischen Informationen unter Verwendung des ersten Gewichtungskoeffizienten und des zweiten Gewichtungskoeffizienten.

## Revendications

1. Dispositif d'aide à la navigation de navire (10, 10e, 10f), comprenant :
un module de mesure (30, 30e, 30f) configuré pour acquérir des informations de mesure sur un objet qui est une cible d'ancrage d'un navire (100) à l'aide d'un résultat de télémétrie d'une zone incluant l'objet ;
un module de réglage d'informations initiales provisoires (23, 23e) configuré pour accepter une spécification d'informations initiales provisoires pour des informations caractéristiques sur l'objet ;
un module de réglage d'informations caractéristiques initiales (41, 41e, 41f) configuré pour régler des informations caractéristiques initiales sur l'objet à l'aide des informations initiales provisoires et des informations de mesure ; et
un module de mise à jour d'informations caractéristiques (42, 42e, 42f) configuré pour mettre à jour des informations caractéristiques sur l'objet, dans lequel le module de mise à jour d'informations caractéristiques comprend :
un module de calcul de différence (421) configuré pour calculer une différence entre les informations caractéristiques initiales ou les informations caractéristiques avant mise à jour et chacune d'une pluralité d'informations de mesure ;
un module de réglage de coefficient de pondération (422) configuré pour régler un coefficient de pondération (w) sur chacune de la pluralité d'informations de mesure de sorte que le coefficient de pondération diminue à mesure qu'une valeur absolue de la différence augmente ; et
un module de calcul d'informations caractéristiques (423, 423e, 423f) configuré pour calculer des informations caractéristiques mises à jour à l'aide du coefficient de pondération et de la pluralité d'informations de mesure, dans lequel
les informations caractéristiques avant mise à jour sont des informations caractéristiques remontées du module de calcul d'informations caractéristiques.

2. Dispositif d'aide à la navigation de navire selon la revendication 1, dans lequel le module de réglage de coefficient de pondération est en outre configuré pour régler, en tant que coefficient de pondération,
un premier coefficient de pondération (wp) réglé sur une distance entre l'objet et le navire, et
un second coefficient de pondération (wθ) réglé sur une direction de l'objet sur la base du navire, et
dans lequel le module de calcul d'informations caractéristiques est en outre configuré pour calculer les informations caractéristiques mises à jour à l'aide du premier coefficient de pondération et du second coefficient de pondération.

3. Dispositif d'aide à la navigation de navire selon la revendication 1 ou 2, dans lequel le module de calcul d'informations caractéristiques est en outre configuré pour calculer les informations caractéristiques mises à jour à l'aide des informations caractéristiques avant mise à jour et des informations caractéristiques calculées.

4. Dispositif d'aide à la navigation de navire selon l'une des revendications 1 à 3, dans lequel le module de mesure comprend en outre :
un module de télémétrie (31) configuré pour réaliser une télémétrie tridimensionnelle de la zone incluant l'objet ; et
un module de génération d'informations de mesure (33, 33e, 33f) configuré pour générer les informations de mesure à l'aide d'un résultat de la télémétrie tridimensionnelle.

5. Dispositif d'aide à la navigation de navire selon la revendication 4, dans lequel le module de télémétrie comprend en outre un télémètre optique.

6. Dispositif d'aide à la navigation de navire selon la revendication 4 ou 5, dans lequel le module de mesure comprend en outre un module de mesure d'attitude (32) configuré pour mesurer une attitude du navire, et
dans lequel le module de génération d'informations de mesure est en outre configuré pour générer les informations de mesure à l'aide du résultat de la télémétrie tridimensionnelle et de l'attitude.

7. Dispositif d'aide à la navigation de navire selon l'une des revendications 1 à 6, dans lequel les informations caractéristiques sur l'objet sont une quantité de vecteur déterminée par une relation spatiale entre le navire et l'objet.

8. Dispositif d'aide à la navigation de navire selon la revendication 7, dans lequel l'objet est un quai (90), et les informations caractéristiques sur l'objet contiennent une ligne de quai (920) composée de la quantité de vecteur.

9. Dispositif d'aide à la navigation de navire selon la revendication 8, dans lequel les informations caractéristiques sur l'objet contiennent des coordonnées d'un point de référence de quai (929).

10. Dispositif d'aide à la navigation de navire selon la revendication 9, dans lequel le module de mesure comprend en outre un module de positionnement (34) configuré pour mesurer une position du navire, et
dans lequel le module de mise à jour d'informations caractéristiques est en outre configuré pour mettre à jour le point de référence de quai à l'aide de l'attitude et de la position du navire, et la ligne de quai.

11. Procédé d'aide à la navigation de navire, comprenant :
l'acquisition, à l'aide d'un résultat de télémétrie d'une zone incluant un objet qui est une cible d'ancrage d'un navire, d'informations de mesure sur l'objet ;
l'acceptation d'une spécification d'informations initiales provisoires pour des informations caractéristiques sur l'objet ;
le réglage d'informations caractéristiques initiales sur l'objet à l'aide des informations initiales provisoires et des informations de mesure ; et
la mise à jour des informations caractéristiques sur l'objet par :
le calcul d'une différence entre les informations caractéristiques initiales ou les informations caractéristiques avant mise à jour et chacune d'une pluralité d'informations de mesure ;
le réglage d'un coefficient de pondération (w) sur chacune de la pluralité d'informations de mesure de sorte que le coefficient de pondération diminue à mesure qu'une valeur absolue de la différence augmente ;
le calcul d'informations caractéristiques mises à jour à l'aide du coefficient de pondération et de la pluralité d'informations de mesure ; et
la remontée des informations caractéristiques mises à jour à utiliser comme informations caractéristiques avant la mise à jour dans une mise à jour ultérieure des informations caractéristiques sur l'objet.

12. Procédé selon la revendication 11, comprenant en outre :
le réglage, en tant que coefficient de pondération,
d'un premier coefficient de pondération réglé sur une distance entre l'objet et le navire, et
d'un second coefficient de pondération réglé sur une direction de l'objet sur la base du navire ; et
le calcul des informations caractéristiques mises à jour à l'aide du premier coefficient de pondération et du second coefficient de pondération.

13. Procédé selon la revendication 11 ou 12, dans lequel les informations caractéristiques mises à jour sont calculées à l'aide des informations caractéristiques avant mise à jour et des informations caractéristiques calculées.

14. Programme d'aide à la navigation de navire configuré pour faire exécuter à une unité de traitement un traitement, le traitement comprenant :
l'acquisition, à l'aide d'un résultat de télémétrie d'une zone incluant un objet qui est une cible d'ancrage d'un navire, d'informations de mesure sur l'objet ;
l'acceptation d'une spécification d'informations initiales provisoires pour des informations caractéristiques sur l'objet ;
le réglage des informations caractéristiques initiales sur l'objet à l'aide des informations initiales provisoires et les informations de mesure ; et
la mise à jour des informations caractéristiques sur l'objet par :
le calcul d'une différence entre les informations caractéristiques initiales ou les informations caractéristiques avant mise à jour et chacune d'une pluralité d'informations de mesure ;
le réglage d'un coefficient de pondération (w) sur chacune de la pluralité d'informations de mesure de sorte que le coefficient de pondération diminue à mesure qu'une valeur absolue de la différence augmente ;
le calcul d'informations caractéristiques mises à jour à l'aide du coefficient de pondération et de la pluralité d'informations de mesure ; et
la remontée des informations caractéristiques mises à jour à utiliser comme informations caractéristiques avant la mise à jour dans une mise à jour ultérieure des informations caractéristiques sur l'objet.

15. Programme d'aide à la navigation de navire selon la revendication 14, dans lequel le traitement comprend :
le réglage, en tant que coefficient de pondération,
d'un premier coefficient de pondération réglé sur une distance entre l'objet et le navire, et
d'un second coefficient de pondération réglé sur une direction de l'objet sur la base du navire ; et
le calcul des informations caractéristiques mises à jour à l'aide du premier coefficient de pondération et du second coefficient de pondération.
